# EUROPEAN PATENT APPLICATION

(11) **EP 1 534 034 A1**
(43) Date of publication of application: **25.05.2005**
(21) Application number: 03292902.8
(22) Date of filing: 24.11.2003
(51) Int. Cl.: H04Q 7/38, H04M 3/428

(54) **Communication system and method for informing of a delay of a call establishment**

(71) Applicant: Hewlett-Packard Development Company, L.P., Houston, Texas 77070 (US)
(72) Inventor: Brandt, Marc, 38320 Eybens (FR)
(74) Representative: Lloyd, Richard Graham

(57) **Abstract**

Embodiment provide a communication method to support an exchange between a first, or calling, communication device and a second, or called, communication device; the method comprising the steps of processing call set up data associated with a request to establish a call; and outputting an indication that the call will be established.

## Description

### Field of the Invention

The present invention relates to a communication system and method.

### Background to the Invention

Using today's mobile telephony systems, it is possible to be contacted, or to be able to contact a person, at almost any time of day and at almost any place. While this freedom of communication is greatly appreciated, there are occasions when one is unable to answer an incoming call immediately. For example, if one's mobile phone rings during a meeting, or other inappropriate time, the called party faces a dilemma, that is, to answer the phone immediately, while having to excuse themselves from the meeting, which introduces a significant and confusing delay for the calling party since they only experience silence or background noise, or to delay answering the incoming call until it is appropriate for them to speak openly, such as, for example, when they have left the meeting room, which carries the risk of the call being either diverted to voicemail or the calling party hanging up.

It will also be appreciated that a similar situation might arise if one's mobile phone rings while driving. In many jurisdictions, it is illegal to use particular types of mobile phone while driving. If it is necessary to answer an incoming call while driving, in those jurisdictions where it is illegal, the law provides that the driver should stop their car before engaging in conversation. Again, it will be appreciated that answering the call but failing to engage properly in a conversation until the car has been stopped also carries the risk of confusing the calling party. It will also be appreciated that not answering the call immediately carries the risk of the call being diverted to a voicemail or of the calling party hanging up.

It is an object of embodiments of the present invention at least to mitigate some of the problems of the prior art.

### Summary of Invention

Accordingly, embodiments of the present invention provide a communication method to support an exchange between a first, or calling, communication device and a second, or called, communication device; the method comprising the steps of processing call set up data associated with a request to establish a call; and outputting an indication that the call will be established.

Other embodiments provide a communication method to support an exchange between a first, or calling, communication device and a second, or called, communication device; the method comprising the steps of processing call set up data associated with a request to establish a call; and outputting an indication that the call has been established.

Advantageously, playing, for example, a voice message to the calling party substantially immediately upon detecting an off-hook condition or in response to some other event, for example, in advance of the off-hook condition, affords the called party a pre-determinable period of time to get themselves into a position where they are able to engage properly in a conversation. Therefore, for example, using embodiments of the present invention, if the called party is in a meeting, they are able to answer an incoming call as usual but without needing to engage the calling party immediately in a conversation, which would be impolite given the circumstances.

Alternatively, the called party can answer the incoming call immediately while they are driving and the output of the message might afford them sufficient time to stop their car to allow them to engage in the conversation properly and to comply with the law.

Embodiments provide a communication method in which the step of outputting an indication that the call will be established comprises the step of outputting data representing a first audible communication providing the indication that the call will be established. The indication might comprises data instructing a network element to produce a respective message or other sound such as, for example, a particular tone or tone sequence that represents an indication that the call will be answered in a manner analogous to data representing an engaged tone being output upon detecting that a called mobile or other device is engaged.

Embodiments are provided that further comprise at least one of the steps of creating and storing the data representing the first audible communication.

Embodiments provide a communication method in which the at least one of the steps of creating and storing the data representing the first audible communication comprises the step of recording or sampling, via an input device of the second communication device, a first voice message. Embodiments provide a communication method in which the at least one of the steps of creating and storing the data representing the first audible communication comprises the step of recording or sampling, via an input device of the second communication device, a first voice message. Suitably, the data representing the indication can be created by the user using their communication device or other apparatus or loaded or obtained from some other source in which the data was previously created. For example, the data can be downloaded from the Internet or other network retailer.

Preferred embodiments provide a communication method in which the step of storing comprises the step of transmitting the data representing the first audible communication to a network element for subsequent output in response to detecting processing the call set up data. Therefore, locally generated audible communications such as, for example, speech messages can be transmitted to a network element to be output on behalf of the subscriber rather than the indication or audible message being output by the subscriber's communication device itself.

Alternatively, or additionally, the indication that the call will be answered or that a call will be established can be output by the subscriber's communication device itself. Suitably, embodiments provide a communication method in which the step of storing comprises the step of storing the data representing at least the first voice message in a memory of the second communication device.

In some instances, it might be desirable to vary the message or indication that is output. Accordingly, embodiments provide a communication method in which the step of outputting data representing the first audible communication comprises the step of selecting the data representing the first audible communication from a plurality of data representing respective audible communications. Therefore, the message or indication to be output can be selected according to a user's needs.

Rather than a user having to select a message to be output manually, embodiments can be realised in which the message to be output is selected automatically. Accordingly, embodiments provide a communication method in which the step of selecting the data representing the first audible communication from the plurality of data representing respective audible communications is responsive to the step of detecting a user input command identifying the first audible communication of the plurality of audible communications as the audible communication to be output in response to processing the call set up request. Therefore, the user can instruct a network element or their communication device to select the indication or message to be output. Preferred embodiments provide a communication method in which the step of selecting the first audible communication from the plurality of audible communications is responsive to the step of determining which condition is satisfied of a plurality of conditions associated with the plurality of audible communications and retrieving and outputting as the first audible communication at least one audible communication associated with the plurality of audible communications having a satisfied condition.

Embodiments provide a communication method in which the step of selecting the first audible communication from the plurality of audible communications is responsive to identification data associated with the first, or calling, communication device. Advantageously, the message or indication to be output can be tailored or made personal to the identity of the person calling the subscriber

Embodiments provide a communication method in which the data representing the first audible communications comprises data representing at least one of a voice message, music, sounds or other audible communication. Accordingly, the indication that the call will be answered can take many forms such as a voice message or an agreed tone or tone sequence that would be recognised as providing an indication that the call will be answered.

In preferred embodiments there is provided a communication method comprising the step of detecting a call acknowledgement event and in which the step of outputting the indication that the call will be established is responsive to detecting the call acknowledgement event. Preferably, detecting the call acknowledgement event comprises the step of detecting a network generated call acknowledgement event or a user generated event. A network generated event is an event generated by an element of the network on behalf of a user whereas a user generated event is an event that is generated in response to a user action.

In preferred embodiments, the call acknowledgement event comprises a call answer event and the method comprises the step of establishing the call in response to detecting the call answer event by establishing a respective communication channel associated with the called device.

Embodiments can be realised in which the step of establishing the call is performed before or after the step of outputting the data representing first audible communication.

Embodiments are provided in which the method further comprising the step of outputting data representing a further communication associated with the call.

Some embodiments provide a communication method further comprising the step of detecting a further event. The step of detecting the further event comprises the step of detecting data representing voice activity associated with the call. Alternatively, or additionally, embodiments provide a communication method in which the step of detecting the further event comprises the step of detecting actuation of a user interface such as, for example, detecting actuation of an input device. The user interface might comprise at least one of a button, switch or a touch sensitive screen. In preferred embodiments, there is provided a method in which the button, switch or touch sensitive screen comprises at least one of a call acknowledge or call answer button, switch or portion of the touch sensitive screen.

Preferred embodiments also provide a system for implement such methods. The system might be a network element forming part of a fixed-line or mobile communication network.

However, particularly preferred embodiments provide a communication device such as, for example, a mobile communication device, like a mobile phone, or desktop communication such as a telephone or computer, comprising a call processor to process call set up data associated with a request to establish a call; and an output means to output an indication that the call will be, or has been, established.

Preferred embodiments provide a mobile communication device comprising means to implement a method as described above.

Preferred embodiments also provide a communication device comprising a call processor to process call set up data associated with a request to establish a call; and an output means to output an indication that the call will be, or has been, established.

It will be appreciated that embodiments of the present invention can be realised in the form of software and hardware. Therefore, embodiments provide a computer program comprising executable code adapted to implement a method or system as described and claimed this specification. The computer software can be distributed in a number of ways such as, for example, on a storage medium such as a disc, optical or magnetic, or in the form of a ROM. Therefore, embodiments provide a computer readable storage medium storing such a computer program.

### Brief Description of the Drawings

Embodiments of the present invention will now be described, by way of example only, with reference to the accompanying drawings in which:
figure 1 shows a communication arrangement according to a first embodiment;
figure 2 shows an arrangement according to a second embodiment; and
figure 3 shows, schematically, a mobile communication device according to an embodiment.

### Detailed Description of the Preferred Embodiments

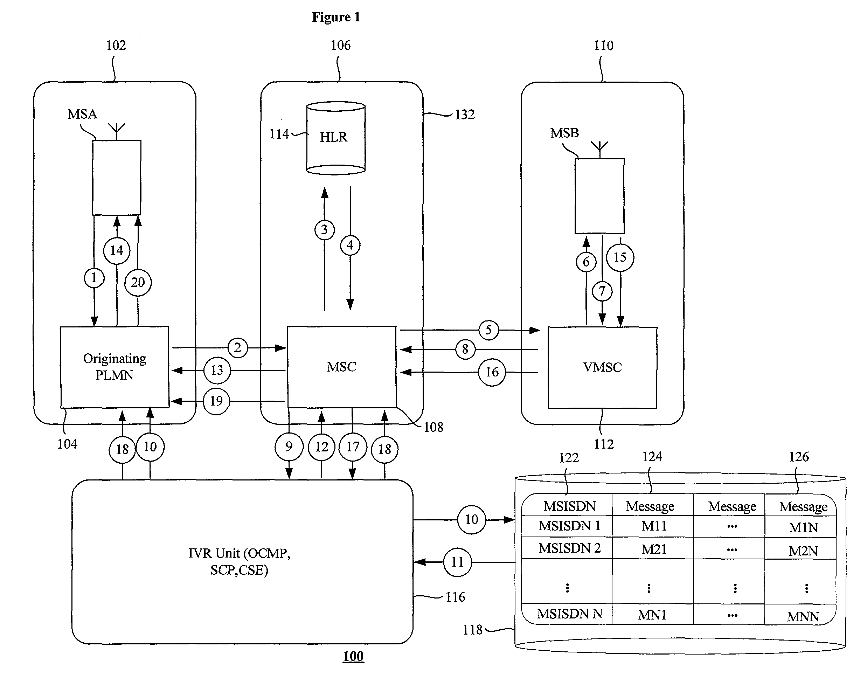

Figure 1 shows a communication arrangement 100 according to an embodiment. The communication arrangement 100 illustrated in figure 1 relates to various elements for supporting mobile telephony exchanges between a calling mobile station (MSA) and a called mobile station MSB. The communication arrangement 100 comprises, in the general case, a first communication network 102 having a respective originating PLMN 104, a second, home, communication network 106 having a respective mobile station services centre MSC 108 and a visited communication network 110 having a respective visited mobile station services centre 112. It can be appreciated that the called mobile station MSB is illustrated as having roamed from its home network 106 to the visited network 110. The home communication network 106 also comprises a home location register 114 (HLR). The communication arrangement 100 also has an interactive voice response unit 116 for providing or outputting voice messages in response to detection of certain events.

The operation of a first embodiment of the present invention will now be described. The user (not shown) of the calling mobile station MSA, at point 1, instigates a call to the called mobile station MSB by sending the MSISDN of the called mobile to the originating PLMN 104. In response to receiving the incoming call request, the originating PLMN 104, forwards the call request, via an ISUP IAM message (not shown), at point 2, to the MSC 108. The home MSC 108 interrogates the HLR 114 to determine the whereabouts of the called mobile station MSB at point 3. The HLR 114 returns, at point 4, data to allow the called mobile station MSB to be contacted or at least located. In the illustrated example, the data comprises an indication that the called mobile station MSB has roamed to the visited network 110. Accordingly, at point 5, the home MSC 108, forwards the call request to the visited mobile service switching centre (VMSC) 112. At point 6, the VMSC 112 forwards the incoming call request to the called mobile station MSB.

Upon realising that there is an incoming call, the called party at least acknowledges the call.

For example, the called party might depress a predetermined key or actuate some other input device of their mobile station to provide an indication that they are at least aware of the incoming call. It will be appreciated that acknowledging the existence of a call might involve actually answering the call, in the sense that a communication channel is established with the calling device. However, embodiments can be realised in which a call acknowledgement event does not answer the call but merely causes the called mobile station MSB to register the acknowledgement of the existence of the call without establishing such a communication channel. Data associated with detecting such a call acknowledgement event can be output by the called mobile station for further processing by other elements of the communication network.

However, in preferred embodiments, the user (not shown) of the called mobile station MSB answers the call in the conventional manner by, for example, pressing an appropriate call answer button. A "call answer event" is a species of the genus "call acknowledgement event". It will be appreciated that such a call answer represents a realisation of a call answer event. In response to detecting actuation of the call answer button (not shown), data representing the actuation of that button or that the call has been answered is sent, at point 7, to the VMSC 112. At point 8, the VMSC 112 forwards the call event data or signal, representing at least one of the call acknowledgement event or call answer event, as the case may be, to the home MSC 108. In response to receiving the call answer data or signal, the MSC 108 forwards a message to the IVR unit 116 at point 9.

It will be appreciated that there are a number of ways in which the MSC 108 can determine whether or not to involve the IVR unit 116. For example, embodiments can be realised in which the called mobile station provides an indication to the MSC 108 that the IVR unit should be involved. Such an indication can be provided such as, for example, by the called mobile station having a number of buttons. The buttons might comprise a button that corresponds to a conventional call answer button, and that would generate an associated call answer event, and a further button might correspond to a call acknowledgement event. Alternatively, or additionally, the same button might be pressed a number of times. For example, pressing the button once might cause a call acknowledgement event to be generated and pressing the button a subsequent time might cause a call answer event to be generated. An indication of the type of call answer event is forwarded to the MSC 108 by the called mobile station. In response to the conventional call answer event, the MSC 108 does not involved the IVR unit. However, in response to detecting a call acknowledgement event or call answer event according to embodiments of the present invention, the MSC 108 does involve the IVR unit.

Alternatively, or additionally, the HLR 114 can be arranged to return an indication of whether or not the called subscriber requires the involvement of the IVR unit 116. Effectively, the called subscriber forwards data to the HLR 114 requesting the HLR 114 to provide an indication of whether or not the IVR unit 116 should be involved upon detecting any type of call answer event or predetermined events. Therefore, when the MSC 108 interrogates the HLR 114 to determine the location of the called mobile station, operational data relating to the use or otherwise of the IVR unit 116 is also returned.

A still further embodiment can be realised in which the MSC 108 always involves the IVR unit 116 in response to any call answer event and the message or audible communication output by the IVR unit 116 is terminated in response to detection of a further event.

In still further embodiments, the IVR unit 116 can be involved by the MSC 108 if a predetermined level or threshold of voice activity from at least one of the called or calling mobile stations is not detected within a relatively short period of time after the call answer event.

Although the embodiments described use the HLR 114 in determining whether or not to involve the IVR unit 116, other embodiments can be realised. For example, embodiments can be realised in which the MSC 108 is responsive to a trigger like a call answer event being detected. The trigger causes the MSC 108 to interrogate an associated CSE, which, in turn, instructs the MSC 108 to forward the call to the IVR unit 116. In preferred embodiments, the service provided by such a CSE could be a subscription service or service that is otherwise activated in response to user commands to allow the redirection of calls according to a user's needs.

The IVR unit 116, in response to receiving data associated with the call event from the MSC 108, uses identification data such as, for example, the MSISDN to retrieve, from a database 118, a corresponding voice message for output to the calling mobile MSA.

It can be appreciated that the database 118 is shown as being stored using non-volatile storage 120. The database 118 comprises, in a preferred embodiment, an MSISDN column 122, and one or more than one message columns 124 to 126. The MSISDN column 122 comprises a list of MSISDNs that are used as an index or reference to corresponding voice messages stored in the message column or columns 124 to 126. It can be appreciated that in the example illustrated, 3 MSISDNs are shown; namely MSISDN 1, MSISDN 2,..., and MSISDN N. These MSISDNs have corresponding voice messages M11 to M1N, M21 to M2N,..., and MN1 to MNN.

At point 10, the MSISDN of the called mobile station MSB is used to access a corresponding voice message. The corresponding voice message is returned, at point 11, to the IVR unit 116. The returned voice message is forwarded or output to the home MSC 108 at point 12. The home MSC 108 forwards or outputs the retrieved voice message to the originating PLMN 104 at step 13. The originating PLMN 104 outputs or forwards the message to the calling mobile station MSA at point 14 where that message is output to the calling party (not shown).

The message returned to the IVR unit 116 by the database 118 might be, for example, an indication that the called party has answered and will shortly be available to engage in a conversation. For example, the message might be *"Hi. This is Harry. I am in the process of leaving a meeting and will be with you shortly*" or *"Hi. This is Marc Brandt. I am in the process of stopping my car and will be with you shortly".* It will be appreciated that any other form of message or audible output can be used to inform the calling party that you are aware of, and have answered, their call but that it is currently inconvenient or inappropriate to engage in a conversation immediately and that you will do so very shortly.

Although the IVR unit 116 is illustrated as outputting the audible communication to the MSC 108, embodiments can be realised in which the audible output message is send to the originating PLMN 104 without involving the MSC 108.

It will be appreciated that, in some embodiments, the IVR unit 116 can be arranged to repeat the message until a called party is able or ready to engage in conversation.

The called party, at some period of time after initially answering or at least acknowledging the existence of the incoming call, will be in a position to speak. The calling party might indicate that they are in a position to speak by, for example, pressing an appropriate button (not shown) on their mobile station MSB or by uttering a word such as *"ready"* or merely by starting to speak and relying on some form of voice detection or voice activation operable within the called mobile station MSB or within another network element such as the MSC 108 or IVR unit 116.

An indication that the called party is ready to speak is forwarded, at point 15, to the visited MSC 112. This indication is forwarded, at point 16, to the home MSC 108. The home MSC 108 forwards, at step 17, an indication that the called party is ready to speak and that the IVR unit 116 should terminate output of the voice message.

In preferred embodiments, the IVR unit 116, at point 18, outputs a message, to the home MSC 108 indicating that the called party is able to speak. For example, the message output at point 18 might be *"Harry is ready. Please proceed*". Optionally, this message might be output to both the mobile stations MSA and MSB. In a preferred embodiment, the message indicating that the called party is ready is forwarded by the home MSC 108, at point 19, to the originating PLMN 104. The originating PLMN 104 forwards the invitation to proceed at point 20, to the calling mobile station MSA. Thereafter, the calling party and the called party can engage in conversation in the usual manner.

Again, the message can be forwarded to the originating PLMN 104 without involving the MSC 108 in alternative embodiments.

It can be appreciated that the database 118 comprises, for each MSISDN, a respective number of messages. For the purpose of illustration only, each MSISDN in the MSISDN column 122 is shown as having N messages. However, it will be appreciated that each MSISDN in the MSISDN column 122 might have other than N messages that can be selected for output. In some embodiments, a mobile station might have only a single message for output.

In preferred embodiments, the called subscriber, that is the owner or subscriber of the called mobile station MSB can select the message to be output according to their needs. Therefore, the database 118 might contain a number of messages that correspond to a MSISDN. The IVR unit 116 can be responsive to a command received from the called mobile station MSB to select the message for output according to a subscriber's requirements. Therefore, for example, the subscriber, using their mobile station MSB, can forward an indication to the IVR unit 116 that the first message, which is *"Hi, this is Harry. I am currently in a meeting. I shall answer your call very shortly. Please hold*", should be output while they are in a meeting. Alternatively, while the owner of the mobile station MSB is driving to or from work or travelling on business in their car, they can instruct the IVR unit 116 to select a different message, which might be *"Hello this is Harry Hutchinson. I am currently drivingmy car. I am aware of your call and I shall be in a position to talk your call shortly. Please hold*." Furthermore, the IVR unit 116 can be arranged to select the messages for output on behalf of a subscriber according to other criteria. For example, the messages might be varied according to the time of day.

Alternatively, or additionally, still further embodiments can be realised in which an electronic calendar system such as, for example, that provided by Microsoft Outlook is arranged to send a message automatically to the IVR unit 116 when a user schedules a meeting. The message might comprise an indication of the time during which the user plans to be in the meeting or data from which such an indication can be calculated. Optionally, the message might also comprise an indication of the preferred message to be output in response to calls received during the meeting. The IVR unit 116 can then output an appropriate message in response to receiving the call according to the time of day.

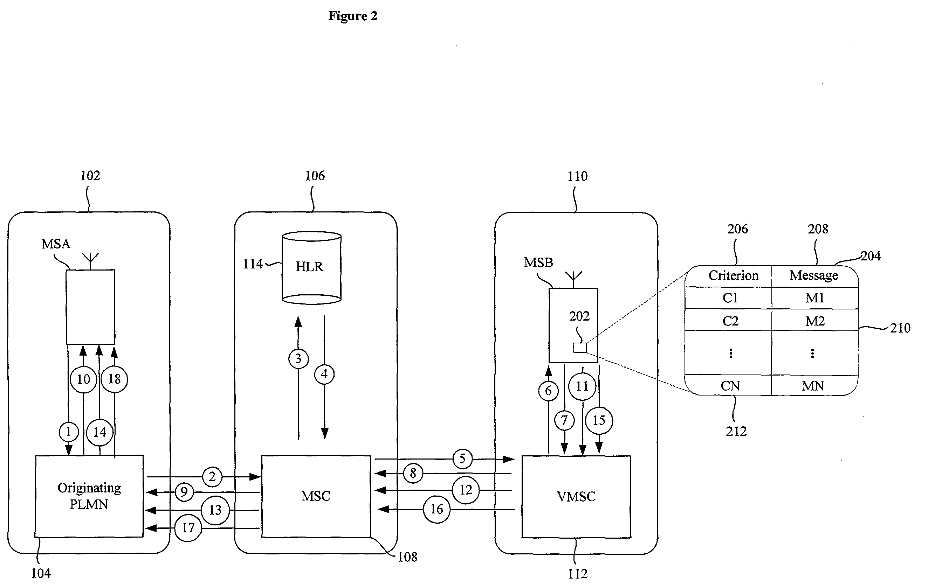

Figure 2 shows a communication arrangement 200 according to a second embodiment of the present invention.

It can be appreciated that figure 2 has much in common with figure 1, that is, a calling mobile station MSA is a subscriber to, or is calling via, a first communication network 102 via an originating PLMN 104. The comments made above in relation to the first embodiment are also applicable to common elements of the second embodiment. There is illustrated the home network 106 of the called mobile station MSB. The home network 106 comprises a mobile service switching centre MSC 108. The called mobile station MSB is shown as having roamed into the coverage area of a visited communication network 110 that is supported or managed by a visited mobile service switching centre VMSC 112. It will be appreciated that any practical implementation of the networks or various elements of the networks will use MSCs, BSCs and BTSs. However, for the sake of clarity and brevity, only the main features of these networks have been described.

The operation of a second embodiment using the arrangement 200 shown in figure 2 will now be described.

The calling mobile station MSA instigates a call to the called mobile station MSB. A call set-up request, containing call set-up data associated with the instigation of the call from the calling mobile station MSA, is sent to the originating PLMN 104 at point 1.

The originating PLMN 104 forwards the call request, at point 2, to the home MSC 108. In response to receiving the call set-up data at point 2, the home MSC 108 forwards a send routing information request message at point 3 to the home location register HLR 114.

At point 4, the HLR 114 replies to the SRI request with a message containing an indication of the appropriate routing or call-forwarding details to allow the called mobile station MSB to be contacted. The home MSC 108 uses the information returned in response to the SRI request to forward, at point 5, the call set-up request to the visited MSC 112. The VMSC 112 forwards, at point 6, the call set-up request to the called mobile station MSB. As is conventional, the called mobile station MSB, in response to receiving the call set-up request, outputs an indication to the user (not shown) that they have an incoming call. The user answers the incoming call in the conventional manner or at least acknowledges the existence of the call. At point 7, an indication that the user has answered the call is sent to the VMSC 112. The VMSC 112 transmits, at step 8, a message providing an indication to the MSC 108 that the call has been answered. The MSC 108 forwards, at point 9, the call answer to the originating PLMN 104, which, in turn, forwards the call answer, at point 10, to the called mobile station MSA. Shortly after the called mobile station MSB has output the call answer data, the called mobile station MSB is arranged to output a message indicating that the called subscriber is aware of the call and will be in a position to speak very shortly. For example, the called mobile station MSB might output the following message *"Hello. This is Harry. I shall be in a position to answer your call shortly".*

It can be appreciated in the embodiment shown that the called mobile station MSB stores, within a memory 202, a table or data base 204 having a criterion column 206 and a message column 208. The message column 208 comprises at least one message to be output in response to answering, or acknowledging the existence of, an incoming call. In preferred embodiments, the table 204 comprises a number of such messages 210. The criterion column 206 contains at least one criterion to be applied in determining whether or not a respective message should be output. In the illustrated embodiment, the table 204 comprises a plurality of such criterion 212, each with a respective message. It will be appreciated, in the embodiment illustrated, that the called mobile station MSB, in selecting the message to be output in response to an incoming call, will apply each, or a selected number, of the criteria 212 in determining the appropriate message, or message, to be output.

This message is output at point 11 to the visited mobile services switching centre 112. The VMSC 112, at point 12, forwards the message to the home MSC 108. The home MSC 108 forwards, at point 13, the message to the originating PLMN 104. The originating PLMN 104 outputs the message, at point 14, to the calling mobile station MSA, whereupon it is output to the calling subscriber in the usual manner.

At sometime in the future, the called subscriber will be in a position to engage in conversation with the calling subscriber. Therefore, the called subscriber provides an indication to this effect by, for example, speaking a predetermined word like *"ready"* that is recognised by the called mobile station MSB. Alternatively, some form of voice activation or detection that is not specific to a particular utterance can be used to determine that the called subscriber is available to engage in conversation with the calling subscriber or the user of the called mobile station can actuate an input device such as, for example, a button, to provide an indication that they are ready.

In preferred embodiments, in response to detecting that the called subscriber is ready to engage in conversation, the called mobile station MSB outputs a message to that effect at point 15. This message is transmitted to the VMSC 112. The message might be, for example, "*I am ready, please proceed*" or *"Sorry for the delay, I am now ready".* The visited MSC 112 forwards that message, at point 16, to the home MSC 108. The home MSC 108 forwards the message, at point 17, to the originating PLMN 104. In turn, the originating PLMN 104 forwards, at point 18, the message that the called subscriber is ready to proceed to the calling mobile station MSA. This message is output by the calling mobile station MSA in the conventional manner. Thereafter, the calling subscriber and the called subscriber can engage in conversation in the conventional manner.

It will be appreciated that the message played by, or on behalf of, the subscriber of the called mobile station MSB is or might be sufficient to give the called subscriber enough time to be able to answer the incoming call or to place themselves in a position where the called subscriber can engage in conversation.

In preferred embodiments, the called mobile station MSB acquires the messages that are output on behalf of the called subscriber by recording those messages using a microphone of the called mobile station MSB and storing the recorded speech in non-volatile memory or in a manner that allows later use.

In alternative embodiments, the called mobile station MSB can also be arranged to select a message for output from various messages stored in its memory according to the needs of the subscriber in a substantially similar manner to that described above in relation to the selection of appropriate messages from the data base 118 in the first embodiment. In effect, the data base 118 can replace the table 202.

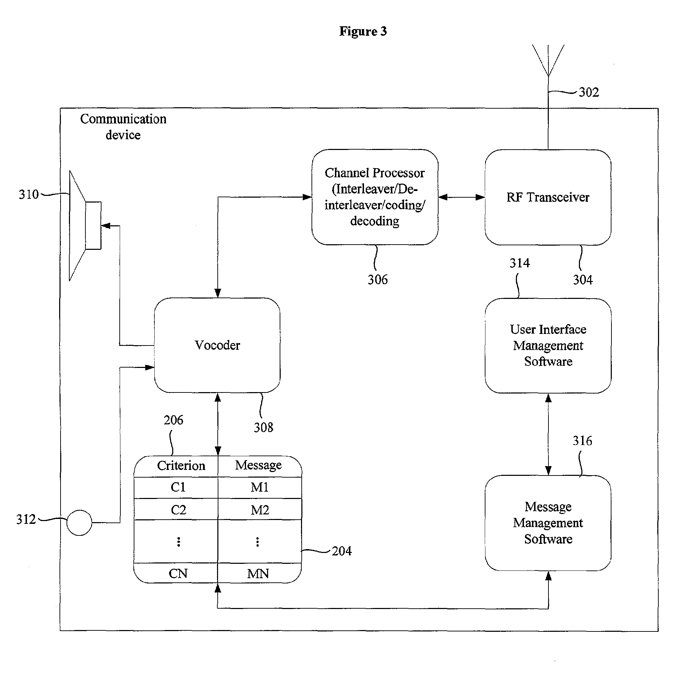

Referring to figure 3, there is shown a mobile communication device 300 such as the called mobile station MSB described above according to an embodiment. The mobile communication device 300 comprises an antenna 302 for transmitting and receiving RF signals to and from a base station (not shown). The RF antenna 302 is connected to an RF transceiver 304 which conditions data received from a channel processor 306 for transmission and forwards received data to the channel processor 306 for processing. The channel processor 306 might perform functions such as channel coding and decoding, rate matching and interleaving and de-interleaving of data packets. Any voice data packets received or processed by the channel processor 306 are processed by a vocoder 308 and are ultimately output to the called subscriber (not shown) via a loudspeaker 310. Any voice for example, received by a microphone 312 is processed by the vocoder 308 before it passes to the channel processor 306 for ultimate output to a base station (not shown).

The communication device 300 comprises user interface management software 314. The user interface management software 314 is responsible for detecting and giving effect to subscriber input actions such as, for example, number dialling and other input device actuations. In particular, the user interface management software 314 detects a call answer event or call acknowledgement event. The event is relayed to message management software 316.

The message management software 316, in a preferred embodiment, selects a message from the table 204 storing one or more messages for output for processing by the vocoder 308 and ultimate output to the base station (not shown). In a preferred embodiment, the table 204 comprises the number of messages M1 to MN. The message management software 316 is arranged to select at least one of the messages M 1 to MN for output. Preferably, the selection is governed by, or is responsive to, any one criterion of the number of criteria 212 being satisfied. The message corresponding to any satisfied criterion is selected for processing by the vocoder 308.

The user interface management software 314 is also responsive to detection of a further event to terminate the voice message currently being processed by the vocoder 308. In preferred embodiments, the further event is, for example, the detection of actuation of an input device of the user interface or detection of voice activity.

Alternatively, or additionally, the detection of such a further event causes the message management software 316 to select and output a further message for processing by the vocoder 308. The further message might be, for example, "*I am ready. Please proceed"* or some other indication that the called subscriber is now able to engage in conversation.

The criteria 212 might represent, for example, a subscriber selection of a message to be output in response to answering an incoming call. Alternatively, or additionally, a criterion might relate to a current time or day for which a corresponding message can be selected and output. For example, if criterion C1 is 0900 to 1130, the message management software 316 determines whether the current time falls within the time range defined by criterion C 1 and, if so, outputs the corresponding message M1.

The above embodiments have been described with reference to the calling mobile station MSA instigating a call via an originating PLMN. However, embodiments of the invention are not limited to such an arrangement. Embodiments can be realised in which the calling mobile station interacts with a respective MSC. Still further, the above embodiments have been described with reference to the communication being initiated from a calling mobile station. However, it will be appreciated by those skilled in the art that a fixed line device could also be used.

While the above embodiments have been described with reference to the IVR unit 116 repeating a message, it will be appreciated that embodiments are not limited to such an arrangement. Embodiments can be arranged in which any one of the home MSC 108, the originating PLMN 104, the calling mobile station MSA or the called mobile station MSB is arranged to output the message repeatedly until the calling party is able to speak.

Although the above embodiments have been described with reference to the messages output to the calling party being voice message, embodiments are not limited to such an arrangement. Embodiments can be arranged to output other audible data or audio data such as, for example, music, tones, beeps, tunes or other audible noise is used.

The above embodiments have been described, for the sake of generality, with reference to the mobile station having roamed into a service area supported by an MSC other than the mobile station's home MSC. However, it will be appreciated that embodiments can equally well be realised in which the VMSC is not involved, that is, in which the mobile station is within an area serviced by its home MSC.

Although the embodiments have been described with reference to an IVR unit, embodiments are not limited to such an arrangement. Embodiments can be realised in which the messages or audible data output to the calling device are output by an intelligent network device, an SCP, CSE or other network element.

It will be appreciated that embodiments that act upon detection of a call acknowledgement event have the advantage over those that rely upon a call answer event that call charges might not be incurred while the message that the called party is aware of the call and will answer shortly is being output to the calling party.

The above embodiments have been described with reference to a call between mobile stations, embodiments can be realised in which the call is between a fixed line device and a mobile station in which case the MSC will be a GMSC that interfaces with the fixed line PSTN. Furthermore, embodiments can be realised in which the call is between fixed line devices.

The above embodiments have been described with reference to the subscriber placing their mobile phone in a state in which the audio is output upon detection of a call acknowledgement event or call answer event. However, embodiments are not limited to such an arrangement. Embodiments can be realised in which, for example, the user interface management software 314, message management software 316 or some other functionality within the mobile station automatically adopts a mode of operation in which the audio is output on behalf of the subscriber or automatically informs the MSC 108 or HLR 114 of a desire to arrange for the audio to be output automatically on behalf of the subscriber. For example, the mobile station can be arranged to detect when it is connected to a hands-free car phone kit and to send data containing an indication to that effect to the MSC 108 or HLR 114 or to adopt a particular mode of operation in which audio is output automatically by the mobile station. Additionally, the message to be output might be *"Hi. This is Harry. I'm aware of your call and will be with you shortly".* It will be appreciated that such context sensitive selection of the audio to be output might apply equally well to meetings providing the mobile station has an idea of its current whereabouts.

The above embodiments have been described with reference to the IVR unit being, effectively, in parallel with the MSC 108. However, embodiments can be realised in which the IVR unit 116 is in series between the calling and called mobile stations. In such an embodiment the IVR unit 116 might be realised using the Open Call Media Platform available from Hewlett Packard Company. The OCMP might then be arranged to manage the various legs of the call and exchange between the calling and called mobile stations.

Given the above embodiments, there are various billing models that might be used. For example, the calling party might not incur call charges until the called party is in a position to engage in conversation, that is, for the period while the calling party is effectively on-hold and listening to the audio or otherwise unable to engage in conversation with the called party, the calling party does not incur call charges. Alternatively, or additionally, for such a period the called party might incur call charges.

It will be appreciated by one skilled in the art that embodiments of the present invention can be realised which the communication devices are Voice over IP devices, SIP devices, SMS devices, PTT devices and devices that use ISUP.

It can be appreciated in the above embodiments that the audio output on behalf of the called subscribed. However, embodiments can be realised in which audio is output on behalf of the calling subscriber. For example, if a calling subscriber calls a called subscriber by dialling before, for example, they have picked up the handset and the called subscriber answers before the calling subscriber is in a position to speak, a message or other audio such as, for example, *"Hi. This is Marc. I need to speak to you and will be with you shortly"* can be output until the calling party is in a position to engage in conversation".

Although the above embodiments have been described with reference to the message column or columns containing audio data, other embodiments can be realised. Alternatively, or additionally, the message column or columns might contain, or be replaced or supplemented by a data column (not shown) containing, data identifying the type of audible noise to be output to the calling party. For example, the data might instruct the IVR unit 116, or other network element, to generate a particular type of tone or other signal to be output to the calling party.

In alternative embodiments, the selection of the message to be output can be responsive to identification data associated with the calling subscriber. For example, the calling MSISDN, or other identification data, can be used to select specific messages tailored to that calling party. For example, the calling party might be called Kerry. Therefore, embodiments can be arranged to respond to calls from Kerry by playing a message such as *"Hi Kerry. This is Harry. Please hold and I shall be with you shortly".*

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings) and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

## Claims

1. A communication method to support an exchange between a first, or calling, communication device and a second, or called, communication device; the method comprising the steps of processing call set up data associated with a request to establish a call; and outputting an indication that the call will be, or has been, established.

2. A communication method as claimed in claim 1 in which the step of outputting an indication that the call will be established comprises the step of outputting data representing a first audible communication providing the indication that the call will be established.

3. A communication method as claimed in claims 2 further comprising at least one of the steps of creating and storing the data representing the first audible communication.

4. A communication method as claimed in claim 3 in which the at least one of the steps of creating and storing the data representing the first audible communication comprises the step of recording or sampling, via an input device of the second communication device, a first voice message.

5. A communication method as claimed in either of claims 3 to 4 in which the step of storing comprises the step of transmitting the data representing the first audible communication to a network element for subsequent output in response to detecting processing the call set up data.

6. A communication method as claimed in any preceding claim in which the step of storing comprises the step of storing the data representing at least the first voice message in a memory of the second communication device.

7. A communication method as claimed in any preceding claim in which the step of outputting data representing the first audible communication comprises the step of selecting the data representing the first audible communication from a plurality of data representing respective audible communications.

8. A communication method as claimed in claim 7 in which the step of selecting the data representing the first audible communication from the plurality of data representing respective audible communications is responsive to the step of detecting a user input command identifying the first audible communication of the plurality of audible communications as the audible communication to be output in response to processing the call set up request.

9. A communication method as claimed in either of claims 7 and 8 in which the step of selecting the first audible communication from the plurality of audible communications is responsive to the step of determining which condition is satisfied of a plurality of conditions associated with the plurality of audible communications and retrieving and outputting as the first audible communication at least one audible communication associated with the plurality of audible communications having a satisfied condition.

10. A communication method as claimed in any of claims 7 to 9 in which the step of selecting the first audible communication from the plurality of audible communications is responsive to identification data associated with the first, or calling, communication device.

11. A communication method as claimed in any preceding claim in which the data representing the first audible communications comprises data representing at least one of a voice message, music, sounds or other audible communication.

12. A communication method as claimed any preceding claim further comprising the step of detecting a call acknowledgement event and in which the step of outputting the indication that the call will be established is responsive to detecting the call acknowledgement event.

13. A communication method as claimed in claim 12 in which the step of detecting the call acknowledgement event comprises the step of detecting a network generated call acknowledgement event.

14. A communication method as claimed in claim 12 in which the step of detecting the call acknowledgement event comprises the step of detecting a user generated call acknowledgement event.

15. A communication method as claimed in any of claims 12 to 14 in which the call acknowledgement event comprises a call answer event and the method comprises the step of establishing the call in response to detecting the call answer event by establishing a respective communication channel associated with the called device.

16. A communication method as claimed in claim 15 in which the step of establishing the call is performed before the step of outputting the data representing first audible communication.

17. A communication method as claimed in claim 16 in which the step of establishing the call is performed after the step of outputting the data representing the first audible communication.

18. A communication method as claimed in any preceding claim further comprising the step of outputting data representing a further communication associated with the call.

19. A communication method as claimed in any preceding claim further comprising the step of detecting a further event.

20. A communication method as claimed in claim 19 in which the step of detecting the further event comprises the step of detecting data representing voice activity associated with the call.

21. A communication method as claimed in either of claims 19 and 20 in which the step of detecting the further event comprises the step of detecting actuation of a user interface.

22. A communication method as claimed in claim 21 in which the step of detecting actuation of the user interface comprises detecting actuation of an input device.

23. A communication method as claimed in claim 22 in which the step of detecting actuation of the input device comprises the step of detecting actuation of at least one of a button, switch or a touch sensitive screen.

24. A communication method as claimed in claim 23 in which the button, switch or touch sensitive screen comprises at least one of a call acknowledge or call answer button, switch or portion of the touch sensitive screen.

25. A communication system comprising means to implement a method as claimed in any preceding claim.

26. A mobile communication device comprising a call processor to process call set up data associated with a request to establish a call; and an output means to output an indication that the call will be, or has been, established.

27. A mobile communication device as claimed in claim 25 further comprising a system to implement a method as claimed in any of claims 2 to 24.

28. A communication device comprising a call processor to process call set up data associated with a request to establish a call; and an output means to output an indication that the call will be, or has been, established.

29. A communication device as claimed in claim 28 further comprising a system to implement a method as claimed in any of claims 2 to 24.

30. A computer program comprising executable code adapted to implement a method or system as claimed in any preceding claim.

31. A product comprising storage storing a computer program as claimed in claim 30.
